# EUROPEAN PATENT APPLICATION

(11) **EP 4 628 819 A1**
(43) Date of publication of application: **08.10.2025**
(21) Application number: 23903205.5
(22) Date of filing: 16.11.2023
(51) Int. Cl.: F25D 11/00, F25B 1/00, F25B 49/02

(54) **CONDENSING UNIT CONTROL DEVICE, TRANSPORTATION REFRIGERATION DEVICE EQUIPPED WITH SAME, AND CONDENSING UNIT CONTROL METHOD**

(30) Priority: 15.12.2022 JP 2022200260
(71) Applicant: Mitsubishi Heavy Industries Thermal Systems, Ltd., Tokyo 100-8332 (JP)
(72) Inventor: KOMORIYA, Taiki, Tokyo 100-8332 (JP); OHATA, Yohei, Tokyo 100-8332 (JP); JINNO, Hiroki, Tokyo 100-8332 (JP)
(74) Representative: Cabinet Beau de Loménie
(86) International application number: PCT/JP2023/041370
(87) International publication number: WO 2024/127907

(57) **Abstract**

Provided is a condensing unit control device that can reduce noise produced by a condensing unit, dissipate heat from electrical components, and maintain cooling capacity for objects to be transported. This condensing unit control device is for a transportation refrigeration vehicle including a compressor that compresses a refrigerant used in a transportation refrigeration device, and a condensing unit that has a condenser for condensing the refrigerant compressed by the compressor and a plurality of fan driving motors (62, 63) for blowing air to the condenser, the control device controlling the condensing unit so that noise reducing control is executed to operate the plurality of fan driving motors at 50% or less of the maximum output when a first condition which is any one of the following conditions is met: the compressor is stopped, a defrost operation is performed, a heating operation in a storage is performed, and the condensing unit is operated at a predetermined value or below.

## Description

### Technical Field

The present disclosure relates to a condensing unit control device, a transportation refrigeration device equipped with the control device, and a condensing unit control method.

### Background Art

A refrigeration unit mounted on a transportation refrigeration vehicle can be operated even in a case where the engine of the vehicle is stopped. For example, when loading or unloading a transportation target (transported object), the engine of the vehicle is stopped. However, the temperatures of a storage and the transportation target need to be continuously managed. Therefore, the operation of the refrigeration unit is continuously performed.

The operation of the refrigeration unit is continued not only in a case where the refrigeration unit is operated in order to manage the temperature but also in a case where it is necessary to operate a fan of a condensing unit in order to discharge the heat of a condenser of the condensing unit provided in the refrigeration unit.

In PTL 1, there is disclosed a structure in which in order to eliminate noise generated by a driving source such as an engine provided in a casing of a refrigeration unit, the cross-sectional area of a flow path of air flowing from a driving source housing part to a compressor housing part is narrowed by providing a throttling portion formed by a partition wall between the driving source housing part and the compressor housing part.

### Citation List

### Patent Literature

[PTL 1] Japanese Unexamined Patent Application Publication No. 2020-125891

### Summary of Invention

### Technical Problem

However, the structure of the refrigeration unit disclosed in PTL 1 can suppress noise caused by the driving source such as the engine, but cannot suppress noise caused by the fan of the condensing unit provided in the refrigeration unit. When the engine of the vehicle is stopped, the driving sound of the fan of the condensing unit is the main cause of the noise. Therefore, unless the driving sound of the fan of the condensing unit is suppressed, the human around the transportation refrigeration vehicle including an operator is uncomfortable.

The present disclosure has been made in view of such circumstances, and an object of the present disclosure is to provide a condensing unit control device capable of realizing silencing of a condensing unit, heat dissipation of an electrical component, and maintenance of cooling capacity for a transportation target.

### Solution to Problem

A condensing unit control device according to an aspect in some embodiments of the present disclosure is a condensing unit control device that is used in a transportation refrigeration vehicle including a compressor that compresses a refrigerant which is used in a transportation refrigeration device, and a condensing unit that has a condenser condensing the refrigerant compressed by the compressor and is provided with a plurality of fan driving motors for blowing air to the condenser, the control device including: a control unit that controls the condensing unit to execute silencing control of operating the plurality of fan driving motors at 50% or less of a maximum output in a case where a first condition is satisfied, the first condition being a condition in any one of a case where the compressor is stopped, a case where a defrosting operation is performed, a case where a heating operation in a storage is performed, or a case where an output of the condensing unit is operated at a predetermined value or less.

A transportation refrigeration device according to an aspect in some embodiments of the present disclosure includes the condensing unit control device described above.

A condensing unit control method according to an aspect in some embodiments of the present disclosure is a condensing unit control method that is used in a transportation refrigeration vehicle including a compressor that compresses a refrigerant which is used in a transportation refrigeration device, and a condensing unit that has a condenser condensing the refrigerant compressed by the compressor and is provided with a plurality of fan driving motors for blowing air to the condenser, the condensing unit control method including: controlling the condensing unit to execute silencing control of operating the plurality of fan driving motors at 50% or less of a maximum output in a case where a first condition is satisfied, the first condition being a condition in any one of a case where the compressor is stopped, a case where a defrosting operation is performed, a case where a heating operation in a storage is performed, or a case where an output of the condensing unit is operated at a predetermined value or less.

### Advantageous Effects of Invention

According to the present disclosure, it is possible to realize silencing of the condensing unit, heat dissipation of an electrical component, and maintenance of cooling capacity for a transportation target. Since the quality of the transportation target can be maintained with a low load, an effect of improving the efficiency of power consumption can be achieved.

### Brief Description of Drawings

Fig. 1 is a side view of a transportation refrigeration vehicle provided with a transportation refrigerator according to an embodiment of the present disclosure.
Fig. 2 is a schematic configuration diagram showing a refrigeration cycle of the transportation refrigerator of Fig. 1.
Fig. 3 is a schematic configuration diagram showing an example of a hardware configuration of a control device of the transportation refrigerator of Fig. 1.
Fig. 4 is a functional block diagram showing an example of a function of the control device of Fig. 3.
Fig. 5 is a circuit diagram showing a state in which a plurality of fan driving motors are connected in parallel in the condensing unit of Fig. 1.
Fig. 6 is a circuit diagram showing a state in which a plurality of fan driving motors are connected in series in the condensing unit of Fig. 1.

### Description of Embodiments

Hereinafter, an embodiment according to the present disclosure will be described with reference to the drawings.

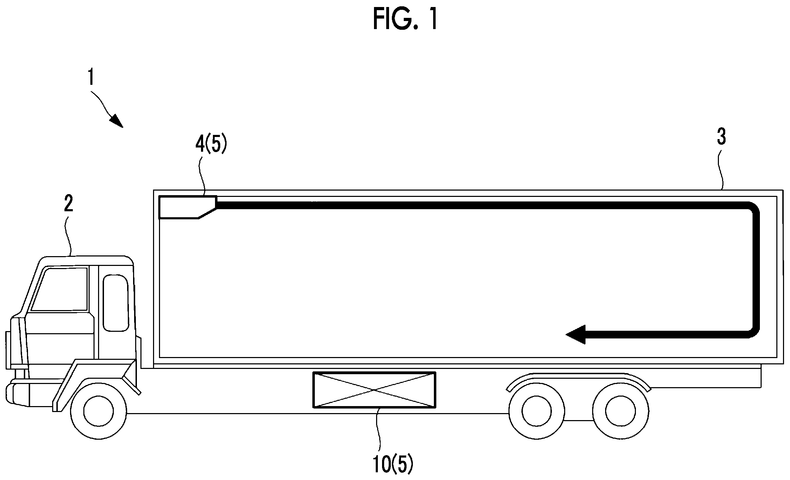

Fig. 1 is a schematic configuration of a transportation refrigeration vehicle 1 provided with a transportation refrigerator according to an embodiment of the present disclosure. The transportation refrigeration vehicle 1 includes a tractor (vehicle main body) 2, a storage 3 that stores a transported object which is a transportation target, and a transportation refrigerator 5 that is connected to a rear side of the tractor 2 and adjusts a temperature of a space in the storage 3. The transportation refrigerator 5 includes an evaporator unit 4 and a condensing unit 10. The evaporator unit 4 and the condensing unit 10 are connected to each other by a refrigerant pipe (not shown) to configure a refrigeration cycle.

The storage 3 is a sealable container that is loaded on the loading platform of the tractor 2 and is used for storing the transported object. The storage 3 is provided with the evaporator unit 4. The air in the storage 3 is cooled by heat exchange between an evaporator of the evaporator unit 4 and the air in the storage 3.

The evaporator unit 4 accommodates, in a case thereof, a fan (not shown), a fan driving motor (not shown) that rotates the fan, an expansion valve (not shown) that throttles a refrigerant, an evaporator that evaporates the refrigerant led from the expansion valve, and the like. The evaporator is, for example, a heat exchanger having a heat transfer tube through which the refrigerant flows and a fin attached to the heat transfer tube. The refrigerant is evaporated by heat exchange with the evaporator, and thus heat is taken away from the air in the storage, and the air in the storage is cooled.

The condensing unit 10 has an outer shell formed by a box-shaped case fixed to a chassis of the transportation refrigeration vehicle 1, and accommodates, in a case thereof, a fan (not shown), a fan driving motor (not shown) that rotates the fan, a compressor that compresses a refrigerant, a condenser that condenses a high-temperature and high-pressure refrigerant sent from the compressor, a motor (not shown) and/or an engine (not shown) that drives the compressor, and the like. The condenser is, for example, a heat exchanger having a heat transfer tube through which a refrigerant flows and a fin attached to the heat transfer tube. The refrigerant is condensed in the condenser, so that heat is discharged to the outside air.

A control box provided with an electric circuit such as a power conversion device, an engine, a generator (alternator) (not shown) that is driven by the engine, and the like are accommodated inside a casing of the transportation refrigerator 5.

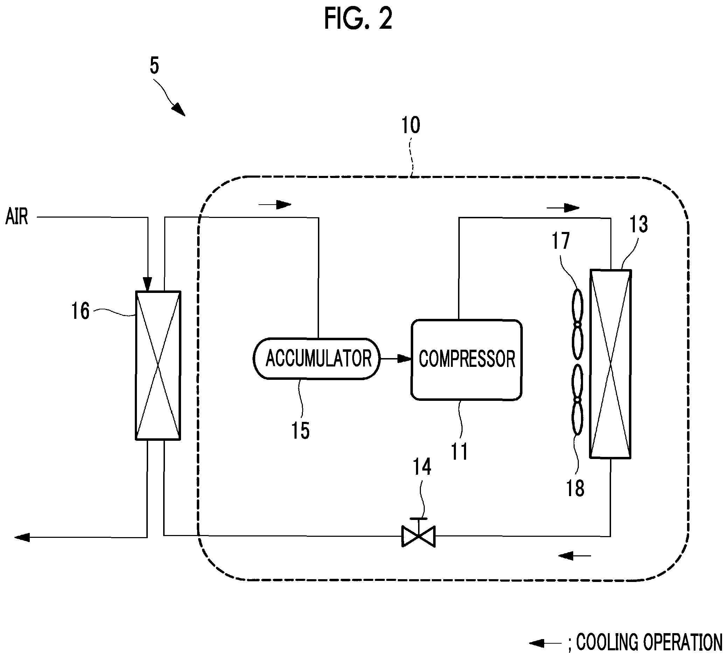

Fig. 2 shows a refrigerant circuit of a refrigeration cycle of the transportation refrigerator.

The refrigeration cycle of the transportation refrigerator 5 is configured to include the condensing unit 10 that includes a compressor 11, a condenser 13, and an expansion valve 14, and an evaporator 16 provided in the evaporator unit. The refrigerant evaporates by heat exchange between the air in the storage 3, and heat is taken away from the air in the storage the evaporator 16, so that the air in the storage is cooled.

As shown in Fig. 2, the condensing unit 10 of the transportation refrigerator 5 includes the compressor 11 that compresses a refrigerant, the condenser 13, and the expansion valve 14. The compressor 11 is, for example, a compressor having a variable rotation speed, which is driven by an inverter motor (not shown). For example, the output of the transportation refrigerator 5 is controlled by controlling the frequency (rotation speed) of the inverter motor of the compressor 11 by a control unit which will be described later. The compressor 11 is not limited to this example, and may be, for example, a fixed speed compressor in which the rotation speed is fixed.

The condensing unit 10 includes the condenser 13 that performs heat exchange between a refrigerant and outside air, fans 17 and 18, the expansion valve 14 that expands the refrigerant, and the like. The condensing unit 10 includes an accumulator 15 provided in a pipe on a suction side of the compressor 11 for the purpose of gas-liquid separation or the like of the refrigerant.

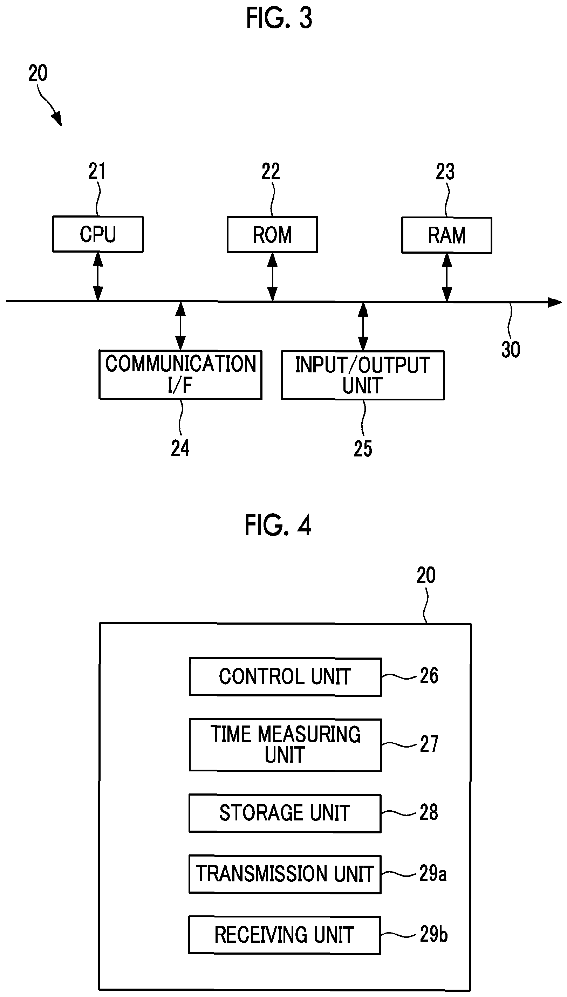

Fig. 3 is a schematic configuration diagram showing an example of a hardware configuration of a control device according to the embodiment of the present disclosure. As shown in Fig. 3, a control device 20 has a computer (computer system), and includes, for example, a CPU 21, an auxiliary storage device (ROM) 22 that stores a program which is executed by the CPU 21 and data which is referred to by the program, a main storage device (RAM) 23 that functions as a work area at the time of executing each program, a communication interface 24 for connection to a network, an input/output unit 25 that receives an input (user input) from a keyboard, a mouse, or the like and an input from an external device, and outputs a control command to the external device that can communicate with the control device 20. Each of these units is connected via, for example, a bus 30. As the auxiliary storage device 22, for example, a magnetic disk, a magneto-optical disk, a semiconductor memory, or the like can be given as an example.

As an example, a series of processes for implementing various functions which will be described later are stored in the auxiliary storage device 22 in the form of a program, the CPU 21 reads the program into the main storage device 23 to execute information processing and operation processing, and thus, various functions are implemented. As the program, a form installed in advance in the auxiliary storage device 22, a form which is provided in a state of being stored in another computer-readable storage medium, a form which is distributed via wired or wireless communication means, or the like may be applied. The computer-readable storage medium is a magnetic disk, a magneto-optical disk, a CD-ROM, a DVD-ROM, a semiconductor memory, or the like.

Fig. 4 is a functional block diagram showing an example of functions of the control device according to the embodiment of the present disclosure. As shown in Fig. 4, the control device 20 includes a control unit 26, a time measuring unit 27, a storage unit 28, a transmission unit 29a, and a receiving unit 29b. These constituent elements provided in the control device 20 can electrically communicate with each other.

The control unit 26 calculates or determines an operation amount of each electrical component provided in the transportation refrigerator, based on the operation condition of the transportation refrigeration vehicle and the operating target of the transportation refrigerator, and controls each electrical component provided in the transportation refrigerator. The control unit 26 determines whether or not to execute the silencing control, based on a condition for executing the silencing control, which will be described later, and the current operation conditions of each of the transportation refrigeration vehicle and the transportation refrigerator, which are stored in the storage unit 28.

In the present embodiment, a main board 61, which will be described below, will be described as having the function of the control unit 26.

The time measuring unit 27 measures the current time and time information about the condensing unit. The time information about the condensing unit is, for example, a continuous operation time, a cumulative operation time, or the like of the condensing unit. The current time and the time information of the condensing unit, which are measured by the time measuring unit 27, are stored in the storage unit 28, and the control unit 26 uses the information when it is determined whether or not to execute the silencing control, which will be described later.

The storage unit 28 stores the operation conditions of the condensing unit, for example, a target value of a refrigerant temperature for controlling the condensing unit and an operation amount of each electrical component corresponding to the target value. Each condition (a first condition) for executing the silencing control (described later), which includes the operation condition of the transportation refrigeration vehicle, time information such as the continuous operation time of the transportation refrigerator, position information of the transportation refrigeration vehicle, and the like, is stored.

The transmission unit 29a transmits the position information of the transportation refrigeration vehicle to a command device (not shown) present at a remote location. The command device present at a remote location is, for example, a remote monitoring device provided in a management facility of the transportation refrigeration vehicle, or a position information management device capable of transmitting and receiving a GPS signal.

The transmission unit 29a may be capable of transmitting not only the position information of the transportation refrigeration vehicle but also any information about the control of the transportation refrigerator, such as the time information about the condensing unit described above, to the command device present at a remote location. A communication form when the transmission unit 29a transmits the position information may be either of a wireless communication form or a wired communication form.

The receiving unit 29b receives a control command of the condensing unit based on the position information of the transportation refrigeration vehicle, which is transmitted from a command device (not shown) present at a remote location. Then, the control unit 26 determines whether or not to execute the silencing control (described later), based on the control command received from the command device. A communication form when the receiving unit 29b receives the control command may be either of a wireless communication form or a wired communication form.

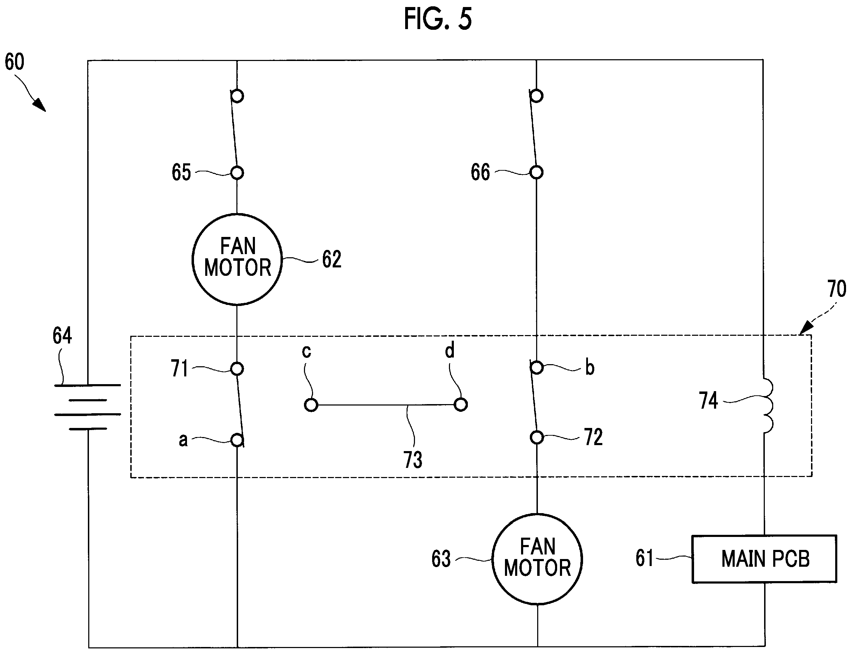

Fig. 5 is a circuit diagram showing a state in which a plurality of fan driving motors are connected in parallel in the condensing unit. As shown in Fig. 5, during a normal operation of the transportation refrigerator, a plurality of fan driving motors 62 and 63 that drive a plurality of fans (for example, the fans 17 and 18 in Fig. 2) provided in the condensing unit are connected in parallel.

A circuit 60 in which a plurality of fan driving motors are connected in parallel in the condensing unit is configured to include, for example, the main board 61, two fan driving motors 62 and 63, a power source 64, switching elements (for example, relay elements) 65 and 66, and a connection switching unit 70. The connection switching unit 70 is configured to include switching elements (for example, relay elements) 71 and 72, an electrical path 73, and a relay coil 74.

The main board 61 is, for example, a circuit board equipped with a programmable logic device (PLD) such as a field-programmable gate array (FPGA). The main board 61 is electrically connected to each electrical component of the transportation refrigerator. A control command to each electrical component provided in the transportation refrigerator is calculated in response to the operation conditions of the transportation refrigerator, and the control command is output to each electrical component.

In the present embodiment, the main board 61 will be described as having the functions of the control unit 26 described above.

The fan driving motors 62 and 63 are motors for rotating the fans for blowing air to the condenser, and are provided in the vicinity of the condenser that is a heat exchanger. Air is blown to the condenser by the rotation of the fan driving motors 62 and 63, and heat exchange is performed between the air taken in from the outside of the transportation refrigerator and the refrigerant in the condenser.

The power source 64 is a power source for supplying electric power to electrical components such as the main board 61 and the fan driving motors 62 and 63. Although not shown in the drawings, an element, a circuit, or a device for adjusting the supplied electric power according to each electrical component is connected between the power source and each electrical component.

The switching elements 65 and 66 are, for example, relay elements, the switching element 65 is provided between the power source 64 and the fan driving motor 62, and the switching element 66 is provided between the power source 64 and the fan driving motor 63. The switching elements 65 and 66 are switched on and off by a control command of the main board 61.

In a case where the switching elements 65 and 66 are turned off based on the control command of the main board 61, the electric power supply to the fan driving motors 62 and 63 is cut off and the fan driving motors 62 and 63 are stopped. In a case where the switching elements 65 and 66 are turned on based on the control command of the main board 61, each of the fan driving motors 62 and 63 is driven by being supplied with electric power from the power source 64, as shown in Fig. 5.

The connection switching unit 70 is configured to include the switching elements 71 and 72, the electrical path 73, and the relay coil 74. The switching element 71 is, for example, a relay element, and the relay coil 74 is driven based on the control command of the main board 61, so that the switching element 71 is switched to be connected to either of a contact point a or a contact point c. Similarly, the switching element 72 is, for example, a relay element, and the relay coil 74 is driven based on the command of the main board 61, so that the switching element 72 is switched to be connected to either of a contact point b or a contact point d.

When the condensing unit is in the normal mode, in order to connect the fan driving motors 62 and 63 in parallel, the switching element 71 is connected to the contact point a and the switching element 72 is connected to the contact point b.

The relay coil 74 is supplied with electric power from the power source 64 and is driven in response to the command of the main board 61. The contact point to be connected to each of the switching elements (relay elements) 71 and 72 is switched depending on the driving state of the relay coil 74 (for example, the strength of the magnetic field generated by the relay coil 74). The configuration in which the connection state of each of the switching elements 71 and 72 is switched using the relay coil 74 is not limited to this example, and known configurations may be appropriately combined.

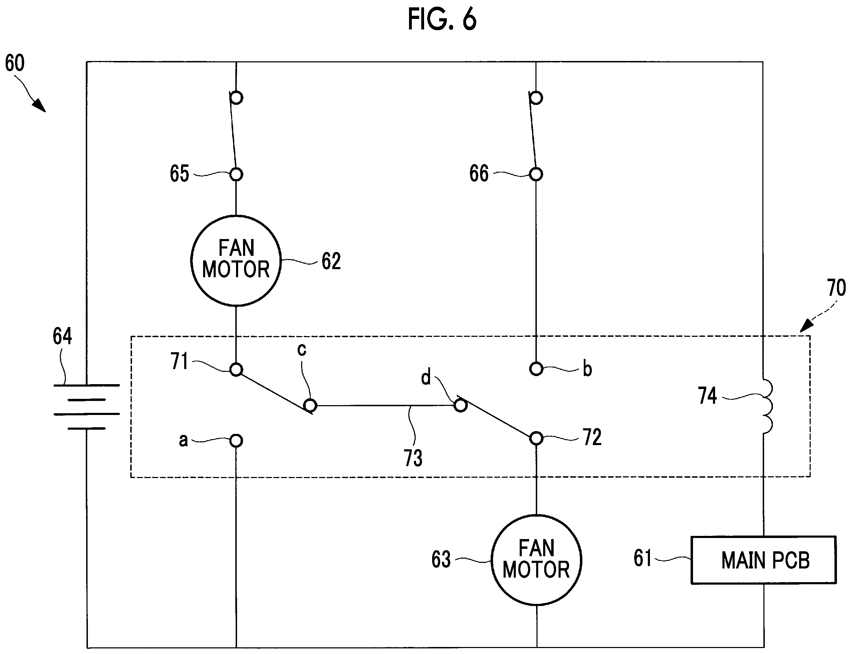

Fig. 6 is a circuit diagram showing a state in which a plurality of fan driving motors are connected in series in the condensing unit. When the silencing control is executed, the main board 61 controls the switching elements 71 and 72 to switch the connection states thereof such that the plurality of fan driving motors 62 and 63 and the power source 64 provided in the condensing unit 10 are connected in series.

The electrical path 73 is a current path in which one end is the contact point c and the other end is the contact point d. When the silencing control, which will be described later, is executed and the condensing unit is operated in a silencing mode, the switching element 71 is switched from a state of being connected to the contact point a to a state of being connected to the contact point c, which is one end of the electrical path 73, and the fan driving motor 62 is connected to the electrical path 73. Similarly, when the silencing control is executed, the switching element 72 is switched from a state of being connected to the contact point b to a state of being connected to the contact point d, which is one end of the electrical path 73, and the fan driving motor 62 is connected to the electrical path 73.

As shown in Fig. 6, the plurality of fan driving motors 62 and 63 are connected in series, so that the voltage that is supplied from the power source to each of the fan driving motors 62 and 63 becomes 50% or less of that in a case where the plurality of fan driving motors 62 and 63 are connected in parallel. Therefore, the output capacity of the plurality of fan driving motors 62 and 63 is reduced due to connecting the plurality of fan driving motors 62 and 63 in series, and thus the driving sound of the plurality of fan driving motors 62 and 63 is reduced.

### (Execution Example of Silencing Control)

In a case where the transportation refrigeration vehicle is stopped and the compressor is stopped, the main cause of the noise that is generated from the transportation refrigeration vehicle is the driving sound of the fan driving motors 62 and 63 provided in the condensing unit. However, even in a case where the transportation refrigeration vehicle is stopped and the compressor is stopped, since it is necessary to continue maintaining the low temperature state in the storage and dissipating heat from the electrical components of the condensing unit, it is not preferable to stop the fan driving motors 62 and 63.

Therefore, the main board 61 provided in the control device performs the silencing control of switching the operation mode of the condensing unit from the normal mode to the silencing mode, based on the operation condition of the transportation refrigeration vehicle and the operation condition of the transportation refrigerator. Specifically, the silencing control is control of switching the connection state between the plurality of fan driving motors 62 and 63 and the power source 64 provided in the refrigerator by switching the connection states of the switching elements 71 and 72, and driving the fan driving motors 62 and 63 at a low output (for example, 50% or less of the maximum output).

Hereinafter, the silencing control will be described with reference to Figs. 5 and 6.

In a case of wanting to increase the outputs of the plurality of fan driving motors 62 and 63 and wanting to cool the inside of the storage, the control device operates each of the plurality of fan driving motors 62 and 63 with high output in order to cool the condenser. In this case, the condensing unit is controlled to be operated in the normal mode.

In the normal mode, the plurality of fan driving motors 62 and 63 and the power source 64 are connected in parallel. That is, in a case where the fan driving motors 62 and 63 are operated in the normal mode, a voltage corresponding to the output voltage of the power source 64 is applied to each of the plurality of fan driving motors 62 and 63.

As shown in Fig. 5, in the normal mode, the main board 61 switches a connection destination of the switching element 71 such that the switching element 71 is connected to the contact point a, in order to connect the fan driving motor 62 and the power source 64 in parallel. In this way, the fan driving motor 62 and the power source 64 are connected in parallel.

Similarly, in the normal mode, the main board 61 switches a connection destination of the switching element 72 such that the switching element 72 is connected to the contact point b, in order to connect the fan driving motor 63 and the power source 64 in parallel. In this way, the fan driving motor 63 and the power source 64 are connected in parallel.

As described above, in a case where the condensing unit is operated in the normal mode, the condensing unit is operated in a state where the plurality of fan driving motors 62 and 63 and the power source 64 are connected in parallel, as shown in Fig. 5.

The connection states of the switching elements 71 and 72 may be synchronized with each other. For example, a program in which in a case where the switching element 71 is connected to the contact point a, the switching element 72 is always connected to the contact point b may be stored in the storage unit 28 provided in the control device 20 in advance.

Next, in a case where the main board 61 wants to lower the outputs of the plurality of fan driving motors 62 and 63 in the silencing mode, for example, in a case where the temperature in the storage is maintained, in order to cool the evaporator, the output of each of the plurality of fan driving motors 62 and 63 is controlled to be lower than that in a case where the temperature in the storage is lowered. In this case, the condensing unit is controlled to operate in the silencing mode with priority given to reducing the sound that is generated from the condensing unit.

In the silencing mode, the plurality of fan driving motors 62 and 63 and the power source 64 are connected in series. That is, in a case where the fan driving motors 62 and 63 are operated in the silencing mode, a voltage that is applied to one fan driving motor is determined by the output voltage of the power source 64 and the number of fan driving motors that are operated in the silencing mode. As described above, by switching the plurality of fan driving motors 62 and 63 and the power source 64 to the series connection, the voltage that is applied to each fan driving motor can be reduced, and as a result, the output capacity of each of the fan driving motors 62 and 63 can be reduced.

As shown in Fig. 6, in the silencing mode, the main board 61 switches the connection destination of the switching element 71 such that the switching element 71 is connected to the contact point c that is one end of the electrical path 73, in order to connect the fan driving motor 62 and the power source 64 in series. In this way, the fan driving motor 62 and the power source 64 are connected in series.

Similarly, in the silencing mode, the main board 61 switches the connection destination of the switching element 72 such that the switching element 72 is connected to the contact point d of the electrical path 73, in order to connect the fan driving motor 63 and the power source 64 in series. In this way, the condensing unit is operated in a state in which the plurality of fan driving motors 62 and 63 and the power source 64 are connected in series, as shown in Fig. 6.

As described above, in a case where the silencing control is executed and the condensing unit is switched from the normal mode to the silencing mode, the connection state between the plurality of fan driving motors 62 and 63 and the power source 64 is switched from the parallel connection to the series connection.

Then, the condensing unit is operated in the silencing mode, that is, the connection state between the plurality of fan driving motors 62 and 63 and the power source 64 is switched to the series connection, so that, for example, in a case where the number of fan driving motors provided in the condensing unit is two, the applied voltage of each fan driving motor can be limited to a value of 50% of the applied voltage in the normal mode.

In the switching elements 71 and 72 in the present embodiment, a node to which one of the switching elements is connected may be determined in accordance with the connection state of the other. For example, as shown in Fig. 5, in a case where the switching element 71 is connected to the contact point a, the switching element 72 is connected to the contact point b. As shown in Fig. 6, in a case where the switching element 71 is connected to the contact point c which is one end of the electrical path 73, the switching element 72 is connected to the contact point d which is one end of the electrical path 73.

### (Case of being executed during Charging of Power Storage Unit)

Hereinafter, other conditions under which the silencing control is executed will be described.

When the transportation refrigeration vehicle 1 is stopped, the engine of the transportation refrigeration vehicle 1 is stopped. However, the transportation refrigerator 5 continues to operate because the cooling in the storage 3 needs to be continued. In this case, the transportation refrigerator 5 is operated by the electric power that is supplied from a power storage unit (not shown) provided in the transportation refrigeration vehicle 1.

Therefore, when the transportation refrigeration vehicle 1 is traveling, the power storage unit is required to be sufficiently charged by the electric power that is generated by an alternator provided in the transportation refrigeration vehicle 1. In a case of transporting a cooling target, it is also necessary to continue the operation of the fan driving motors 62 and 63 in order to cool the inside of the storage 3 and the electrical components provided in the condensing unit 10. However, in a season or a time zone in which the temperature of outside air is low, there is a case where it is possible to cool the inside of the storage 3 and the electrical components provided in the condensing unit 10 without increasing the output capacity of the fan driving motors 62 and 63.

In such a case, the control unit 26 executes the silencing control in order to preferentially charge the power storage unit provided in the transportation refrigeration vehicle 1, rather than cooling the inside of the storage 3 and the electrical components provided in the condensing unit 10. Since the output capacity of the fan driving motors 62 and 63 is limited by executing the silencing control, in the electric power generated by the alternator provided in the transportation refrigeration vehicle 1, it is possible to reduce the amount of electric power for driving the fan driving motors 62 and 63 and to increase the amount of electric power for charging the power storage unit.

As described above, since the amount of electric power that is required to drive the fan driving motors 62 and 63 is reduced by performing the silencing control, it is possible to cool the inside of the storage 3 and the electrical components provided in the condensing unit 10 and to charge the power storage unit with the electric power that is not required to be supplied to the fan driving motors 62 and 63.

### (Case of being executed during Defrosting Operation)

The silencing control described above is executed, for example, during a defrosting operation.

In a case where the transportation refrigerator 5 performs the cooling operation for a long time, frost is generated on the condenser 13, and thus the operation efficiency of the transportation refrigerator 5 decreases. Therefore, it is necessary to perform defrosting control in order to remove the frost generated on the condenser 13. In the defrosting control, the cooling of the condenser 13 is temporarily stopped. That is, the output capacity of each of the plurality of fan driving motors 62 and 63 can be reduced to be lower than that in the normal mode.

In such a case, the control unit 26 executes the silencing control and controls the output capacity of the plurality of fan driving motors 62 and 63 to be lower than that in the normal mode by switching the connection states of the switching elements 71 and 72. In this way, it is possible to maintain the temperature and quality of the transportation target in the storage 3 and to reduce the sound that is generated from the condensing unit 10.

### (Case of being executed during Heating in Storage)

The silencing control described above is executed, for example, during heating (heating control) in the storage 3.

For example, in a case where it is not necessary to cool the temperature in the storage 3 or in a case where it is desired to increase the temperature in the storage 3, since it is not necessary to cool the condenser 13, the output capacity of each of the plurality of fan driving motors 62 and 63 can be reduced.

In such a case, the control unit 26 executes the silencing control and controls the output capacity of the plurality of fan driving motors 62 and 63 to be lower than that in the normal mode by switching the connection states of the switching elements 71 and 72. In this way, it is possible to maintain the temperature and quality of the transportation target in the storage 3 and to reduce the sound that is generated from the condensing unit 10.

### (Case of being executed during Low-Load Cooling Operation)

The silencing control described above is executed, for example, during a low-load cooling operation.

For example, in a case where the temperature in the storage is only maintained, the output capacity of the plurality of fan driving motors 62 and 63 for cooling the condenser 13 may be lower than that in a case where the temperature in the storage is lowered.

In such a case, the control unit 26 executes the silencing control and controls the output capacity of the plurality of fan driving motors 62 and 63 to be lower than that in the normal mode by switching the connection states of the switching elements 71 and 72. In this way, it is possible to maintain the temperature and quality of the transportation target in the storage 3 and to reduce the sound that is generated from the condensing unit 10.

### (Case of being executed based on Time Condition)

The silencing control described above is executed, for example, based on a time condition.

The control device 20 may include the time measuring unit 27 that measures time information such as a current time, a continuous operation time of the condensing unit, and a cumulative operation time of the condensing unit, and the storage unit 28 that stores a time condition for executing the silencing control.

Then, in a case where the time information measured by the time measuring unit 27 corresponds to the time condition stored in the storage unit 28, the control unit 26 executes the silencing control.

For example, the time condition stored in the storage unit 28 is conditional on the execution of the silencing control in a case where the transportation refrigeration vehicle 1 is stopped in a nighttime time zone between 19:00 and 7:00 of the next day. In a case where the current time measured by the time measuring unit 27 is within the range of the time zone of the time condition, the control unit 26 executes the silencing control when the transportation refrigeration vehicle 1 is stopped.

As described above, the time condition for executing the silencing control is stored in the storage unit 28 in advance, so that the control unit 26 executes the silencing control in a case where the time information measured by the time measuring unit 27 corresponds to the time condition. In this way, the silencing control can be executed at a more appropriate timing, and the sound that is generated from the condensing unit 10 can be reduced.

### (Case of being executed based on Position Condition)

The silencing control described above is executed, for example, based on a position condition.

For example, the control unit 26 may include the transmission unit 29a that transmits the position information of the transportation refrigeration vehicle to the command device present at a remote location, and the receiving unit 29b that receives a control command of the condensing unit 10 based on the position information of the transportation refrigeration vehicle transmitted from the command device.

Then, the control unit 26 determines whether or not to execute the silencing control, based on the control command from the command device.

For example, in a case where it is determined that the transportation refrigeration vehicle 1 is traveling or stopping in a residential area, based on the position information of the transportation refrigeration vehicle 1 transmitted from the transmission unit 29a of the control device 20, the command device transmits the control command including a command to execute the silencing control to the receiving unit 29b of the control device 20. Then, the control unit 26 executes the silencing control, based on the control command.

As described above, in a case where the transportation refrigeration vehicle 1 travels or stops in an environment in which the silencing of the condensing unit is more required, the control unit 26 executes the silencing control, based on the control command based on the position information of the transportation refrigeration vehicle 1 transmitted to the command device present at a remote location. In this way, the silencing control can be executed at a more appropriate timing, and the sound that is generated from the condensing unit 10 can be reduced.

In addition to the example described above, the silencing control described above may be executed in response to an input command of the user. The time condition or the position condition for executing the silencing control may be appropriately set by the user.

According to the present embodiment, the following effects are obtained.

The control unit 26 (the main board 61) executes the silencing control in a case where no problem occurs even though the fan driving motors 62 and 63 of the condensing unit 10 provided in the transportation refrigerator 5 are driven at a low output, based on the operation condition of the transportation refrigeration vehicle 1 and the operation condition of the transportation refrigerator 5. The silencing control is executed, so that the connection state between the fan driving motors 62 and 63 and the power source 64 is changed from the parallel connection (the normal mode) to the serial connection (the silencing mode). That is, in the silencing mode in which the silencing control is executed, the output capacity of the fan driving motors 62 and 63 can be limited to 50% or less of the maximum output. In this way, it is possible to realize silencing of the condensing unit 10, heat dissipation of the electrical components, and maintenance of cooling capacity for the transportation target.

The control unit 26 can execute the silencing control when the power storage unit provided in the transportation refrigeration vehicle 1 is being charged. In this case, it is possible to reduce the electric power that is used for operating the condensing unit 10, in the electric power that is generated by the alternator during the traveling of the transportation refrigeration vehicle 1, and to preferentially perform the charging of the power storage unit. In this way, it is possible to improve the efficiency of power consumption.

The control device 20 may include the time measuring unit 27 and the storage unit 28. In this case, the control unit 26 can execute the silencing control, based on the current time and the time information about the transportation refrigerator 5. The control unit 26 executes the silencing control in a case where the time information measured by the time measuring unit 27 corresponds to the condition (for example, the nighttime time zone) for executing the silencing control stored in the storage unit 28. In this way, the control unit can execute the silencing control at a more appropriate timing and reduce the sound that is generated from the condensing unit 10.

The control device 20 may include the transmission unit 29a that transmits the position information of the transportation refrigeration vehicle 1 to the command device at a remote location, and the receiving unit 29b that receives the control command of the condensing unit 10 based on the position information of the transportation refrigeration vehicle 1 transmitted from the command device. In this case, the control unit 26 can execute the silencing control, based on the control command of the condensing unit 10 transmitted from the command device (for example, the command to execute the silencing control in a case of being located in a residential area). In this way, the control unit can execute the silencing control at a more appropriate timing and reduce the sound that is generated from the condensing unit 10.

Although the present disclosure has been described above using the embodiments, the technical scope of the present disclosure is not limited to the scope described in the above embodiments. Various modifications or improvements can be added to the above-described embodiments within the scope not departing from the concept of the present disclosure, and forms to which the modifications or the improvements are added are also included in the technical scope of the present disclosure. The above embodiments may be combined as appropriate.

The condensing unit control device, the transportation refrigeration device provided with the condensing unit control device, and the condensing unit control method, which are described in the embodiment described above, are understood as follows, for example.

A control device (20) of the condensing unit (10) according to a first aspect of the present disclosure is a condensing unit control device that is used in a transportation refrigeration vehicle (1) including a compressor (11) that compresses a refrigerant which is used in a transportation refrigeration device (5), and a condensing unit that has a condenser (13) condensing the refrigerant compressed by the compressor and is provided with a plurality of fan driving motors (62, 63) for blowing air to the condenser, the control device including: a control unit (26, 61) that controls the condensing unit to execute silencing control of operating the plurality of fan driving motors at 50% or less of a maximum output in a case where a first condition is satisfied, the first condition being a condition in any one of a case where the compressor is stopped, a case where a defrosting operation is performed, a case where a heating operation in a storage (3) is performed, or a case where an output of the condensing unit is operated at a predetermined value or less.

According to the condensing unit control device according to the present disclosure, the control unit controls the condensing unit to execute the silencing control of operating the output of the plurality of fan driving motors at 50% or less of the maximum output, in a case where the compressor is stopped, the defrosting operation is performed, the heating operation in the storage is performed, or the output of the condensing unit is operated a predetermined value or less. For example, in a case where the transportation refrigeration vehicle arrives at a destination and the engine of the transportation refrigeration vehicle is stopped, it is required to reduce the occurrence of sound caused by the transportation refrigeration vehicle. On the other hand, even in such a situation, it is necessary to continue cooling of the transportation target in order to maintain the quality of the transportation target. In such a case, the control unit controls the condensing unit to execute the silencing control of operating the plurality of fan driving motors at 50% or less of the maximum output, so that silencing of the condensing unit, heat dissipation of the electrical components, and maintenance of the cooling capacity for the transportation target can be realized. Since the quality of the transportation target can be maintained with a low load, it is possible to improve the efficiency of power consumption.

In a control device (20) of a condensing unit (10) according to a second aspect of the present disclosure, in the first aspect, the condensing unit further includes a power source (64) that supplies electric power to the plurality of fan driving motors, and a plurality of switching elements (71, 72) that switch a connection state between each of the plurality of fan driving motors and the power source, and the control unit controls connection states of the switching elements in a case where the silencing control is executed.

According to the condensing unit control device according to the present disclosure, the condensing unit further includes, in addition to the fan driving motors, the power source and the plurality of switching elements that switch the connection state of each fan driving motor, and the control unit controls each switching element to operate the fan driving motor at 50% or less of the maximum output when the silencing control is executed. For example, the switching element is a relay element, and switches a connection state between each of the plurality of fan driving motors and the power source to any of parallel connection or series connection. For example, in a case where the silencing control is not executed, the control unit controls each switching element such that each of the plurality of fan driving motors and the power source are connected in parallel. In a case where the silencing control is executed, the control unit controls each switching element such that each of the plurality of fan driving motors and the power source are connected in series, thereby operating the plurality of fan driving motors at 50% or less of the maximum output. As described above, in a case where the control unit controls the connection state of each switching element to execute the silencing control, it is possible to easily operate each fan driving motor at 50% or less of the maximum output. In this way, it is possible to realize silencing of the condensing unit, heat dissipation of the electrical components, and maintenance of cooling capacity for the transportation target. Since the quality of the transportation target can be maintained with low-load control, it is possible to improve the efficiency of power consumption.

In a control device (20) of the condensing unit (10) according to a third aspect of the present disclosure, in the first aspect or the second aspect, the transportation refrigeration vehicle includes an alternator that generates electric power by using energy during vehicle traveling, and a power storage unit that is charged with the electric power generated by the alternator, the first condition includes a case where the power storage unit is charged, and the control unit controls the condensing unit to execute the silencing control in a case where the power storage unit is charged.

According to the condensing unit control device according to the present disclosure, the first condition includes a case where the power storage unit is charged, and the control unit controls the condensing unit to execute the silencing control in a case where the power storage unit is charged. In this way, it is possible to reduce the electric power that is used for the operation of the condensing unit, in the electric power that is generated by the alternator during the traveling of the transportation refrigeration vehicle, and to preferentially perform the charging of the power storage unit. In this way, it is possible to improve the efficiency of power consumption.

In a control device (20) of the condensing unit (10) according to a fourth aspect of the present disclosure, the condensing unit control device according to any one of the first to third aspects further includes: a time measuring unit (27) that measures a current time and time information about the condensing unit; and a storage unit (28) that stores a time condition for executing the silencing control, in which the control unit controls the condensing unit to execute the silencing control, based on the time information and the time condition.

According to the condensing unit control device according to the present disclosure, the control unit controls the condensing unit to execute the silencing control, based on the time information measured by the time measuring unit and the time condition for executing the silencing control, which is stored in the storage unit in advance. Here, the time information is, for example, a continuous operation time, a cumulative operation time, or the like of the condensing unit. The time condition is, for example, a condition set in advance that a time period from 19:00 to 7:00 of the next day is nighttime. Then, the control unit controls the condensing unit to execute the silencing control when the transportation refrigeration vehicle is stopped, in a case where the time measured by the time measuring unit is the time zone set as the time condition. In this way, the control unit can execute the silencing control at a more appropriate timing and reduce the sound that is generated from the condensing unit.

In a control device (20) of the condensing unit (10) according to a fifth aspect of the present disclosure, the condensing unit control device according to any one of the first to fourth aspects further includes: a transmission unit (29a) that transmits position information of the transportation refrigeration vehicle to a command device present at a remote location; and a receiving unit (29b) that receives a control command of the condensing unit based on the position information transmitted from the command device, in which the control unit controls the condensing unit to execute the silencing control, based on the control command.

According to the condensing unit control device according to the present disclosure, the control unit transmits the position information of the transportation refrigeration vehicle to the command device present at a remote location. Further, the control unit controls the condensing unit to execute the silencing control by the control command based on the position information of the transportation refrigeration vehicle transmitted from the command device. For example, the control unit transmits the position information of the transportation refrigeration vehicle to the command device, and in a case where it is determined that the transportation refrigeration vehicle is traveling in the residential area, based on the position information of the transportation refrigeration vehicle, the command device transmits a control command corresponding to the determination result to the control device. Then, the control unit that has received the control command controls the condensing unit to execute the silencing control when the transportation refrigeration vehicle is stopped in the residential area. In this way, the control unit can execute the silencing control at a more appropriate timing and reduce the sound that is generated from the condensing unit.

A transportation refrigeration device according to a sixth aspect of the present disclosure includes the condensing unit control device according to any one of the first to fifth aspects.

A condensing unit control method according to a seventh aspect of the present disclosure is a condensing unit control method that is used in a transportation refrigeration vehicle including a compressor that compresses a refrigerant which is used in a transportation refrigeration device, and a condensing unit that has a condenser condensing the refrigerant compressed by the compressor and is provided with a plurality of fan driving motors for blowing air to the condenser, the condensing unit control method including: controlling the condensing unit to execute silencing control of operating the plurality of fan driving motors at 50% or less of a maximum output in a case where a first condition is satisfied, the first condition being a condition in any one of a case where the compressor is stopped, a case where a defrosting operation is performed, a case where a heating operation in a storage is performed, or a case where an output of the condensing unit is operated at a predetermined value or less.

### Reference Signs List

1: transportation refrigeration vehicle
2: tractor
3: storage
4: evaporator unit
5: transportation refrigerator
10: condensing unit
11: compressor
13: condenser
14: expansion valve
15: accumulator
16: evaporator
17, 18: fan
20: control device
21: CPU
22: auxiliary storage device
23: main storage device
24: communication interface
25: input/output unit
26: control unit
27: time measuring unit
28: storage unit
29a: transmission unit
29b: receiving unit
30: bus
60: circuit
61: main board
62, 63: fan driving motor
64: power source
70: connection switching unit
71, 72: switching element
73: electrical path
74: relay coil
a, b, c, d: contact points

## Claims

1. A condensing unit control device that is used in a transportation refrigeration vehicle including a compressor that compresses a refrigerant which is used in a transportation refrigeration device, and a condensing unit that has a condenser condensing the refrigerant compressed by the compressor and is provided with a plurality of fan driving motors for blowing air to the condenser, the control device comprising:
a control unit that controls the condensing unit to execute silencing control of operating the plurality of fan driving motors at 50% or less of a maximum output in a case where a first condition is satisfied, the first condition being a condition in any one of a case where the compressor is stopped, a case where a defrosting operation is performed, a case where a heating operation in a storage is performed, or a case where an output of the condensing unit is operated at a predetermined value or less.

2. The condensing unit control device according to Claim 1,
wherein the condensing unit further includes
a power source that supplies electric power to the plurality of fan driving motors, and
a plurality of switching elements that switch a connection state between each of the plurality of fan driving motors and the power source, and
the control unit controls connection states of the switching elements in a case where the silencing control is executed.

3. The condensing unit control device according to Claim 1,
wherein the transportation refrigeration vehicle includes an alternator that generates electric power by using energy during vehicle traveling, and a power storage unit that is charged with the electric power generated by the alternator,
the first condition includes a case where the power storage unit is charged, and
the control unit controls the condensing unit to execute the silencing control in a case where the power storage unit is charged.

4. The condensing unit control device according to Claim 1, further comprising:
a time measuring unit that measures a current time and time information about the condensing unit; and
a storage unit that stores a time condition for executing the silencing control,
wherein the control unit controls the condensing unit to execute the silencing control, based on the time information and the time condition.

5. The condensing unit control device according to Claim 1, further comprising:
a transmission unit that transmits position information of the transportation refrigeration vehicle to a command device present at a remote location; and
a receiving unit that receives a control command of the condensing unit based on the position information transmitted from the command device,
wherein the control unit controls the condensing unit to execute the silencing control, based on the control command.

6. A transportation refrigeration device comprising:
the condensing unit control device according to Claim 1.

7. A condensing unit control method that is used in a transportation refrigeration vehicle including a compressor that compresses a refrigerant which is used in a transportation refrigeration device, and a condensing unit that has a condenser condensing the refrigerant compressed by the compressor and is provided with a plurality of fan driving motors for blowing air to the condenser, the condensing unit control method comprising:
controlling the condensing unit to execute silencing control of operating the plurality of fan driving motors at 50% or less of a maximum output in a case where a first condition is satisfied, the first condition being a condition in any one of a case where the compressor is stopped, a case where a defrosting operation is performed, a case where a heating operation in a storage is performed, or a case where an output of the condensing unit is operated at a predetermined value or less.
